(19) Europäisches Patentamt
European Patent Office
Office européen des brevets

(11) **EP 3 422 868 B1**

(12) **EUROPEAN PATENT SPECIFICATION**

(45) Date of publication and mention
of the grant of the patent:
**18.12.2019 Bulletin 2019/51**

(21) Application number: **17710157.3**

(22) Date of filing: **02.03.2017**

(51) Int Cl.:
*A23K 50/42* (2016.01)    *A23K 40/25* (2016.01)
*A23K 40/30* (2016.01)    *A23K 10/20* (2016.01)
*A23K 10/30* (2016.01)    *A23K 20/147* (2016.01)
*A23K 20/158* (2016.01)

(86) International application number:
**PCT/EP2017/054960**

(87) International publication number:
**WO 2017/149096 (08.09.2017 Gazette 2017/36)**

(54) **PALATABLE CAT KIBBLES CONTAINING SPECIFIC FAT FRACTIONS**

WOHLSCHMECKENDES KATZENTROCKENFUTTER MIT SPEZIFISCHEN FETTFRAKTIONEN

CROQUETTES POUR CHAT SAPIDES CONTENANT DES FRACTIONS DE GRAISSE SPÉCIFIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2016 EP 16305240**

(43) Date of publication of application:
**09.01.2019 Bulletin 2019/02**

(73) Proprietor: **Spécialités Pet Food**
**56250 Elven (FR)**

(72) Inventors:
• **GUILLER, Isabelle**
**56250 Elven (FR)**
• **BRAMOULLE, Loïc**
**56370 Sarzeau (FR)**
• **DE RATULD, Aurélie**
**56880 Ploeren (FR)**
• **CREMONT, Matthieu**
**56400 Brech (FR)**

(74) Representative: **Regimbeau**
**20, rue de Chazelles**
**75847 Paris Cedex 17 (FR)**

(56) References cited:
**US-A1- 2005 106 285      US-A1- 2005 170 067**
**US-A1- 2006 228 448      US-A1- 2008 085 350**
**US-A1- 2015 056 347      US-A1- 2015 237 887**

## Description

The present invention generally relates to the field of pet food, and more particularly to cat kibbles.

More precisely, the present invention concerns a cat kibble comprising specific formulation and fat fractions, said kibble having thus an advantageous palatability to cats.

The present invention further concerns a method for preparing such a palatable cat kibble.

## BACKGROUND OF THE INVENTION

The worldwide pet food market extends continuingly due to a pet population that becomes larger and larger over time, especially in developed countries.

Facing thus an increasing public demand for pet foods, the pet food industry looks for supplying foods which have a high degree of palatability.

There is a wide range of pet foods available on the market. These pet foods may be classified in different categories depending on their consumption purpose: (a) nutritionally-balanced diets, (b) complementary diets, and (c) snacks, treats, and edible toys.

Nutritionally-balanced diets are designed to be fed in addition to water for an extended period of time as the sole source of nutrients; they are thus expected to meet all the energetic and nutrient requirements of the animal.

Complementary diets are not sufficient alone to ensure that all nutrient and energy needs are provided for; they thus have to be combined with other diets.

Snacks, treats, and edible toys are appetizers or rewards that are offered from time to time by the pet owner to the animal.

Concerning more specifically nutritionally-balanced diets, they can in turn be classified in three main categories depending on their moisture content: dry, semi-moist (or semi-dry or soft dry or soft moist), and wet (or canned). Dry pet foods, such as kibbles, typically have a moisture content of less than 14% and generally have a dry, crunchy texture when chewed by pets. Semi-moist pet foods typically have a moisture content in the range of 14 to 50%. Wet pet foods generally have a moisture content above 50%, and often around 80%.

Among these nutritionally-balanced pet foods, there is an increasing demand for dry pet foods, and more particularly kibbles, that need to be more and more palatable. The production of kibbles is well known in the art and the skilled person has the choice between multiple formulations and processes for preparing such products.

Cats are highly specialised carnivores, with high protein requirements, as reflected by their taste perception. Fat is an important dietary component which also provides taste and textural variations to kibbles. Fats can be provided by different sources, either as exogenous fats and/or fats brought by food materials or food ingredients such as meats, meat meals etc.

As for today, palatability-enhancing compositions, which are added by inclusion and/or by coating to the kibbles, stay the essential key factor for obtaining high level of pet food consumption by animals. Indeed, almost all of the commercialized pet foods contain palatability-enhancing compositions in order to increase the palatability thereof, and to make them appealing to pets. A large number of palatability enhancing compositions have thus been described so far.

US 2005/106285 and US 2005/170067 disclose a palatability-enhancing composition for extruded pet food containing at least one ingredient selected from meat products, meat by-products, fish products, fish by-products, dairy products, dairy by-products, sources of microbial proteins, vegetable proteins, carbohydrates and amino acids, and either at least one tripolyphosphate salt (US 2005/106285) or at least one potassium pyrophosphate salt (US 2005/170067).

US 2015/056347 discloses a palatability-enhancing composition including a dry food aroma and a palatability enhancer for improving appeal to pet owners while maintaining satisfying palatability to pets.

US 2006/228448 discloses a pet food composition comprising a first component comprising a source of protein, a source of fat, and a source of carbohydrate, and a second component comprising a biologic.

US 2008/085350 discloses a method for producing a pet food palatability enhancer wherein a specific aroma chemical is combined with an animal or vegetarian digest composition.

US 2015/237887 discloses the use of a particular fat composition for sustaining an enhanced palatability of a pet food over time.

There is still a continuous need for cat kibbles that having a formulation that is intrinsically highly palatable to cats, said intrinsic high palatability being optionally further enhanced by adding one or more palatability-enhancing compositions therein or thereon.

The present invention here provides new kibble formulations that have been selected for their ability to provide palatability to cats.

## SUMMARY OF THE INVENTION

The present invention concerns a cat kibble comprising at least:

a) an animal material A comprising an endogenous fat fraction Fa,
b) an exogenous animal fat Fb,
c) a vegetable material C comprising an endogenous fat fraction Fc,

wherein said cat kibble comprises at least 2.0% of exogenous fat Fb by weight of cat kibble, wherein the ratio R1 of Fa/Fb ranges from 0.7 to 2.5,
and wherein the ratio R2 of (Fa + Fb)/Fc ranges from 6.0 to 13.0.

The present invention also concerns a method for preparing a cat kibble, comprising at least the steps of:

(i) providing at least an animal material A, an exogenous animal fat Fb and a vegetable material C,
(ii) mixing said at least animal material A and said vegetable material C, thereby obtaining a first mixture,
(iii) optionally precooking said first mixture in a preconditioner, thereby obtaining a precooked mixture,
(iv) extruding said first mixture or said precooked mixture, thereby obtaining an extrudate,
(v) drying said extrudate, thereby obtaining said cat kibble,

wherein said exogenous fat Fb is added during step (ii), during step (iii) and/or step (iv).

## DEFINITIONS

Unless specifically stated otherwise, ratios, amounts or percentages are expressed herein by weight of a product reference on a dry matter basis. The person skilled in the art will appreciate that the term "dry matter basis" means that an ingredient's concentration or percentage in a composition is measured after the free water has been removed, or determined on the basis of the weight of the composition once the weight of any free moisture in the composition has been subtracted.

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 (from 0.1 to 1) represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc. Moreover, the terms "at least" and "less than" encompass the hereafter cited value. For example, "at least 5%" has to be understood as also encompassing "5%".

Moreover, in the present invention, measurable values, such as an amount, have to be understood as encompassing standard deviations which can easily be determined by the skilled person in the technical domain of reference. Preferably, these values are meant to encompass variations of $\pm 2\%$, more preferably $\pm 1\%$ from the specified value, as such variations are appropriate to reproduce the disclosed methods and products.

The term "about" as used herein when referring to a measurable value, such as an amount, is meant to encompass variations of $\pm 5\%$, more preferably $\pm 2\%$, even more preferably $\pm 1\%$ from the specified value, as such variations are appropriate to reproduce the disclosed methods and products. Accordingly, the term about can encompass variations larger than the standard deviations discussed above.

In the present disclosure, all of the possible ranges have not been explicitly mentioned so as to avoid having to set out at length and describe each and every value within the range. However, the ranges and ratio limits recited herein are combinable. For example, if ranges of 1-20 and 5-15 are recited for a technical feature, it is understood that ranges of 1-5, 1-15, 5-20 or 15-20 are also contemplated and encompassed thereby. This also applies on values illustrating lower and upper limits. A value illustrating a lower limit is thus combinable with a value illustrating an upper limit so as to form a ratio. For example, if a particular embodiment relates to the ratio X being superior to 2 and another particular embodiment relates to the ratio X being inferior to 5, it is understood that range of 2-5 is also contemplated and encompassed thereby.

The term "out of ratio" as used in the present invention means that the expressed ratio is outside from the ranges of ratios according to the present invention.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

As used herein, the term "kibble" refers to typical dry pet foods formed as particulate chunks or pieces produced by either a pelleting or extrusion process, preferably an extrusion process. The pieces can vary in sizes and shapes, depending on the process or the equipment. For instance, kibbles can have spherical, cylindrical, oval, or similar shapes. These kibbles are eaten by an animal, in particular a cat, and provide at least one nutrient to the animal. A "kibble" is here a "nutritionally-balanced" food or diet, meaning that it contains all known required nutrients for the intended recipient or consumer of the food, in appropriate amounts and proportions based, for example, on recommendations of recognized or competent authorities in the field of companion animal nutrition, such as the guidelines of the American Association of Feed Control Officials (AAFCO). Such foods are therefore capable of serving as a sole source of dietary intake to maintain life or promote production, without the addition of supplemental nutritional sources. In the context of the present invention, a "kibble" refers to an uncoated kibble.

The term "cat kibble" means an uncoated kibble intended for consumption by a cat.

The term "cat kibble ingredient" refers to any compound, composition or material used for preparing cat kibbles, and that is suitable for cat consumption. Non-limiting examples of cat kibble ingredients are animal material, exogenous fat, vegetable material, nutrients, carbohydrates, palatability enhancing compositions, antioxidants, preservatives, surfactants, texturing or texturizing agents, stabilizing agents, amino acids, vitamins, colouring agents, flavors, seasonings, etc.

The term "endogenous fat" refers to an intrinsic or inherent or internal fat originating or provided within a cat kibble ingredient.

The term "exogenous fat" refers to an extrinsic or external fat which is provided as such as an individual cat kibble ingredient. Advantageously, an exogenous fat has a purity of more than 80%, preferably more than 85%, more preferably more than 90%, more preferably more than 95%, more preferably more than 99%, more preferably more than 99.5%.

When referring to a fat content in the context of the present invention, "traces of fat" are not taken into consideration. The term "traces of fat" as used herein means negligible fat amount, or an insignificant fat amount, or an undetectable fat amount (below the threshold level determined by standard methods, such as described in European Regulation EC n°152/2009 Determination of crude oils and fats - Procedure B - available online).

"Animal fats" are fats of animal origin and marine oils. Fats of animal origin (other than marine) are for example poultry fat, chicken fat, pork fat, milk-derived fat, beef tallow or lamb tallow and the like, as well as by-products thereof. Marine oils are typically tuna oil, sardine oil, salmon oil, herring oil, mackerel oil, sand eel oil, trout oil, tilapia oil, catfish oil, anchovy oil, menhaden oil and the like, as well as by-products thereof.

"Vegetable oils" are typically canola oil, soybean oil, corn oil, olive oil, sunflower oil, linseed oil, palm oil, rapeseed oil, sesame oil, coconut oil, peanut oil, safflower oil, and the like, as well as by-products thereof.

The term "animal material" encompasses any material typically derived from the body of an animal such as fresh meats, animal meals, whole dried eggs, animal proteins, animal digests, milk or derivatives, yeasts, and combinations thereof. It typically includes endogenous fat. It does not include exogenous fat. An animal material can be, without limitation, from poultry, pork, beef, sheep, lamb and/or fish.

The term "fresh meat" encompasses meats and meat by-products that may be obtained directly from a slaughterhouse, thus being fresh, raw, cooked or frozen, but not being dried. Meats and meat by-products include carcass, bone, skin, offal, muscle, intestine (provided their content is removed), lung, spleen, kidney, brain, livers, heart, viscera, blood, bone, stomachs, necks, heads, feet and/or gizzards. Fresh meat can be from poultry, pork, beef, sheep, lamb and/or fish.

As used herein, "fish" encompasses any species or kind of fish or crustaceans, preferably tuna, herring, mackerel, sand eel, trout, salmon, tilapia, cod, catfish, anchovy, menhaden, whitefish, shrimp, sardine, and the like.

The term "animal meal" (or animal flour) encompasses meals of meat and meals of meat by-product, typically obtained by at least drying (and for example cooking, pressing, drying, and/or milling) fresh meats. Example of animal meals are poultry (or poultry by-product) meals, pork (or pork by-product) meals, beef (or beef by-product) meals, sheep (or sheep by-product) meals, lamb (or lamb by-product) meals, fish (or fish by-product) meals, greaves.

"Whole dried eggs" (or dried whole eggs) are typically obtaining by pasteurizing and drying liquid eggs.

The term "yeast" herein refers to any yeast, preferably inactive, as well as to yeast by-products that are compatible with compositions for animal consumption. Yeasts are well known in the art as being protein-rich. Yeasts include, without limitation, brewer's yeast, baker's yeast, torula yeast, molasses yeast, and the like. Yeast by-products include, without limitation, yeast extracts, yeast hydrolysates, yeast autolysates, cream yeasts, etc.

The term "animal digest" means herein material which results from chemical and/or enzymatic hydrolysis of fresh meat, i.e. meat or meat by-product, obtained from one of above cited animals. In some embodiments, an animal digest as used herein is fully consistent with the definition promulgated by the Association Of American Feed Control Officials, Inc. (AAFCO). Animal digest is preferably derived from animal meat, including cold-blooded marine animals, excluding hair, horns, teeth, hooves, and feathers. The skilled artisan will appreciate that while such excluded parts are not preferred, trace amounts might be found unavoidably even under good manufacturing practices. Also not included are visceral contents or foreign or fecal matter, although trace contaminant amounts are sometimes present. An animal digest may be dried or not.

The term "vegetable material" encompasses any material, product or composition derived from vegetable or plant material. Vegetable material can be obtained from any vegetable source, such as a source selected from the group consisting of rice, corn (or maize), wheat, milo, alfalfa, barley, soy, chicory, pea, rye, sorghum, oat, tapioca, potato, bean, carrot, beetroot, broccoli, butternut, cabbage, cereal, chickpea, green bean, lentil, spinach, fruits such as apple, blueberries, cranberries, pomegranate, apple, pear, tomatoe, blackberries, and the like. A vegetable material can be originated from any part of vegetable, such as roots, aerial parts, fruits, leafs, seeds and/or woods. A vegetable material can be in any form such as in the form of whole grains, fractions of grains, flakes, grits, meals or flours, semolinas, vegetable proteins and/or gluten.

In the context of the present invention, "protein" also includes protein hydrolysates, the degree of hydrolysis of which can be controlled depending on the objective.

Examples of "carbohydrates" include monosaccharids, such as dextrose, fructose, sucrose, polysaccharides, such as starches, fibers, and the like.

"Fiber" refers to components of a plant that are resistant to digestion by animal's digestive enzymes. Fiber can be soluble or insoluble. Sources of fiber ("fiber sources") for use herein typically have at least 1% of fiber, preferably at least 2%, preferably at least 3%, preferably at least 4%, preferably at least 5%, preferably at least 10%, preferably at least 15%, preferably at least 20% of fiber. Fiber sources include, but are not limited to, beet pulp, guar gum, chicory root, psyllium, cellulose, wheat oat, corn bran, flax seed, and the like. In a particular embodiment, said fiber source has at least 9%, preferably at least 10%, preferably at least 15%, preferably at least 20% of insoluble fiber. In a particular embodiment, said fiber source has at least 9%, preferably at least 10%, preferably at least 15%, preferably at least 20% of soluble fiber.

Examples of nutrients include, without limitation, vitamins, minerals and electrolytes, such as vitamins A, C, E, B12, D3, folic acid, D-biotin, cyanocobalamin, niacinamide, thiamine, riboflavin, pyridoxine, menadione, beta-carotene, calcium pantothenate, choline, inositol, calcium, potassium, sodium, zinc, iron, manganese, copper, iodine, and the like.

Antioxidants, preservatives, surfactants, seasonings, texturing agents or texturizing agents, stabilizing agents, colouring agents, flavors, seasonings, which may be used in the context of the present invention are well known by the skilled person.

As used herein, the term "palatability" refers to the overall willingness of a pet to eat a certain pet food. Whenever a pet shows a preference, for example, for one of two or more pet foods, the preferred pet food is more "palatable", and has "enhanced palatability". Such preference can arise from any of the pet's senses, but typically is related to, inter alia, taste, aroma, flavour, texture, smell and/or mouth feel.

Different methods exist to assess palatability. Examples of such methods involve exposure of pets to petfoods either simultaneously (for example, in side-by-side, free-choice comparisons, e.g., by measuring relative consumption of at least two different pet foods), or sequentially (e.g., using single bowl testing methodologies). Advantageously, at least two different methods may be used to consolidate the thus obtained results on palatability of a given pet food.

Preferably, palatability is measured with consumption intake, typically by using tests such as "two-bowl test" (also called "versus test"), as explained in the Examples. Of course, the person skilled in the art is free to use any other appropriate test than those herein described to determine preference or acceptability. Such alternative tests are well known in the art.

From a functional point of view, the terms "palatability enhancers (PEs)" and "palatability-enhancing compositions (PECs)" mean any material having the capacity of enhancing the palatability of a food composition to a cat. Typically, a palatability-enhancing composition for cat food is an edible composition that provides an aroma, taste, aftertaste, smell, mouth feel, texture, and/or organoleptic sensation that is appealing or pleasing to the cat.

From a structural point of view, the terms "palatability enhancers (PEs)" and "palatability-enhancing compositions (PECs)" may refer to a single material or a blend of materials that may be natural, processed or unprocessed, synthetic, or part of natural and part of synthetic materials.

Despite their equivalent functional meaning, each of the terms "palatability enhancers (PEs)" and "palatability-enhancing compositions (PECs)" can advantageously be used to identify a specific material or blend of material in order to facilitate a proper distinction between various materials or blends of materials that all have advantageous palatability-enhancing properties.

In particular, for clarity purposes, a "palatability-enhancing composition" as used herein will refer to a blend of materials, comprising one or more "palatability enhancers", the latter term referring more precisely to specific materials. A palatability-enhancing composition can comprise, without limitation, inorganic phosphate compounds, animal digests, proteins, peptides, amino acids, yeasts, Maillard reaction products, and/or carbohydrates, and optional ingredients, such as nutrients, anti-oxidants, preservatives, surfactants, texturing agents, flavors, etc.

The term "inorganic phosphate compound" as used herein means a chemical compound comprising at least one phosphorus atom. This chemical compound may be natural or synthetic, ionized or not. An inorganic phosphate compound can include phosphoric acid, monophosphates, pyrophosphates, polyphosphates, and combinations thereof.

As used herein, the term "Maillard reaction product" means herein any compound produced by a Maillard reaction. In particular, a Maillard reaction product is a compound that provides flavour and/or color and/or odor and/or taste and/or aftertaste.

The skilled person well knows what "preconditioning" refers to. Typically, a preconditioning step allows mixing homogeneously powders and liquids, preheating (or precooking) and prehumidifying the feed mixture, and pregelatinizing the starch. A preconditioner is usually not essential but is used for the majority of the pet food process equipments. Starting ingredient mixture is metered into the preconditioner where it is held in a warm, moist environment before being transferred into the extruder. An efficient mixing of environment contributes to better moisture penetration and hydration of the mixture. The preconditioner supplies the extruder with a precooked and hydrated mixture. The main functions of a preconditioner include mixing of multiple ingredients, hydrating the ingredient mixture, precooking which begins gelatinization of starch. There are different types of preconditioners such as atmospheric preconditioners, pressurized preconditioners, and the like.

By the term "extrusion", it is meant herein the process of forcing a food material to flow under one or more of a variety of conditions (mixing, heating, and shear) through a die which is designed to form the ingredients or foods. Extrusion combines several unit operations including mixing, cooking, kneading, shearing, shaping, and forming.

"Drying" refers to the reduction of the moisture level. It can be done by any suitable methods known to the skilled person.

"Coating", as used herein, refers to the topical deposition of a cat kibble coating onto the surface of a cat kibble, such as by spraying, dusting, and the like. A cat kibble coating is typically a fat and/or a palatability-enhancing composition.

The term "single package" means that the components of a kit are physically associated in or with one or more containers and considered a unit for manufacture, distribution, sale, or use. A single package may be containers of individual components physically associated such that they are considered a unit for manufacture, distribution, sale, or use.

As used herein, a "means for communicating information or instructions" is a kit component under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

## DESCRIPTION OF SOME EMBODIMENTS OF THE INVENTION

The present inventors showed for the first time that a high palatability of kibbles to cats can be achieved by using kibble ingredients from animal origin comprising both endogenous fats and exogenous fats in a specific ratio while controlling the proportion of these ingredients in function of the cat kibble composition. This high palatability of the kibbles achieved by a proper and inventive formulation thereof can in turn be enhanced by adding one or more palatability-enhancing compositions therein or thereon. Indeed, cat kibbles according to the invention are more palatable than other cat kibbles when compared with the same palatability-enhancing composition onto or into cat kibbles.

Cat kibble

The present invention thus concerns a cat kibble comprising at least:

    a) an animal material A comprising an endogenous fat fraction Fa,
    b) an exogenous animal fat Fb,
    c) a vegetable material C comprising an endogenous fat fraction Fc,

wherein said cat kibble comprises at least 2.0% of exogenous fat Fb by weight of cat kibble,
wherein the ratio R1 of Fa/Fb ranges from 0.7 to 2.5,
and wherein the ratio R2 of (Fa + Fb)/Fc ranges from 6.0 to 13.0.

The present inventors have found that it is essential to comply with these ratios in order to obtain a cat kibble with a significantly enhanced palatability. In particular, cat kibbles of the invention, comprising these specific ingredients and materials while providing these specific R1 and R2 ratios, are more palatable than cat kibbles that do not share all these essential features.

As above mentioned, a "cat kibble" refers to an uncoated cat kibble. The essential ratios of the present invention are thus to be determined without taking into consideration the composition of an optional coating.

In a particular embodiment, the cat kibble consists of an animal material A comprising an endogenous fat fraction Fa, the exogenous animal fat Fb, the vegetable material C comprising an endogenous fat fraction Fc, wherein said cat kibble comprises at least 2.0% of exogenous fat Fb by weight of cat kibble, wherein the ratio R1 of Fa/Fb ranges from 0.7 to 2.5, and wherein the ratio R2 of (Fa + Fb)/Fc ranges from 6.0 to 13.0.

In a preferred embodiment, the ratio R1 of Fa/Fb is inferior to 2.3, more preferably inferior to 2.0, more preferably inferior to 1.8, more preferably inferior to 1.6, more preferably inferior to 1.4, more preferably inferior to 1.3, more preferably inferior to 1.2.

In a preferred embodiment, the ratio R1 of Fa/Fb ranges from 0.7 to 2.3, more preferably from 0.7 to 2.0, more preferably from 0.7 to 1.2. Indeed, palatability is particularly enhanced when this particular ratio is achieved.

In a preferred embodiment, the ratio R2 of (Fa + Fb)/Fc is inferior to 12.0.

In a particular embodiment, the ratio R2 of (Fa + Fb)/Fc is superior to 6.5, preferably superior to 7.0.

In a preferred embodiment, the ratio R2 of (Fa + Fb)/Fc ranges from 6.0 to 12.0, more preferably from 6.5 to 12.0, yet more preferably from 7.0 to 12.0.

In a particular embodiment, the cat kibble comprises from 20 to 50%, preferably from 25% to 45%, more preferably from 30 to 45% of said animal material A (% by weight of cat kibble).

In a particular embodiment, the animal material A is selected from the group consisting of fresh meats, animal meals, whole dried eggs, animal proteins, animal digests, milk or derivatives, yeasts, and combinations thereof. Preferably, the animal material is selected from poultry, pork, beef, sheep, lamb and/or fish. In a particular embodiment, the animal material A comprises fresh meats, poultry meal, whole dried eggs, greaves, yeasts and/or fish meal.

Advantageously, the animal material A comprises at least animal meal. Preferably, said animal material comprises 5 to 95%, preferably 10 to 95%, more preferably 30 to 95%, more preferably 35 to 95% of animal meal. Alternatively, the animal material A consists of animal meal.

In a particular embodiment, said animal meal comprises poultry meal, poultry meal by-product (also named poultry by-product meal), greaves, fish meal, fish meal by-product, pork meal, pork meal by-product, beef meal, beef meal by-product, sheep meal, sheep meal by-product, lamb meal, lamb meal by-product and/or greaves. More particularly, said animal meal comprises poultry meal, poultry meal by-product, greaves, fish meal and/or fish meal by-product.

Advantageously, the animal material A comprises at least fresh meat. Preferably, said animal material comprises 5 to 90%, preferably 5 to 80%, more preferably 5 to 70%, more preferably 5 to 60%, more preferably 5 to 55%, more preferably 10 to 55% of fresh meat. Alternatively, the animal material A consists of fresh meat.

Advantageously, the animal material A comprises at least whole dried eggs. Preferably, said animal material comprises 1 to 30%, preferably 1 to 25%, more preferably 1 to 20% of whole dried eggs.

Advantageously, the animal material A comprises at least yeasts. Preferably, said animal material comprises 0.5 to 15%, preferably 1 to 15%, more preferably 1 to 13% of yeasts.

In a particularly preferred embodiment, the animal material A comprises:

(i) 5 to 95% of meat meal,
(ii) 0 to 90%, preferably 5 to 90% of fresh meat,
(iii) 0 to 30%, preferably 1 to 30% of whole dried eggs,
(iv) 0 to 15%, preferably 0.5 to 15% of yeasts,
(v) 0 to 10% of animal proteins, animal digests and/or milk.

Preferably, the endogenous fat fraction Fa represents 20 to 80%, more preferably 20 to 75%, more preferably 20 to 70%, more preferably 25 to 70%, more preferably 25 to 65% of the total fat of Fa+Fb+Fc.

In a particular embodiment, the cat kibble comprises at least 2.5%, more preferably at least 3.0%, more preferably at least 3.5%, more preferably at least 4.0%, more preferably at least 4.5% of exogenous fat Fb. This percentage is expressed by weight of cat kibble.

In a particular embodiment, the cat kibble comprises from 2% to 12%, preferably from 2% to 10%, more preferably from 2% to 8%, more preferably from 2 to 6% of the exogenous animal fat Fb (% by weight of cat kibble).

In a preferred embodiment, the exogenous animal fat Fb is selected from poultry fat, chicken fat, pork fat, lamb tallow, milk-derived fat, beef tallow, marine oils, and combinations thereof. More preferably, the exogenous animal fat Fb is selected from the group consisting of pork fat, chicken fat, poultry fat, lamb tallow, milk-derived fat, beef tallow, and combinations thereof. Still more preferably, the exogenous animal fat Fb is selected from the group consisting of pork fat, poultry fat, beef tallow, and combinations thereof, and still more preferably from pork fat, beef tallow, and combinations thereof. For example, the exogenous fat Fb is pork fat. As another example, the exogenous fat Fb is beef tallow.

Advantageously, the exogenous animal fat Fb is the only source of exogenous fat in the cat kibble. In other terms, in a particular embodiment, the cat kibble does not contain any other exogenous fat such as vegetable oil.

Preferably, the exogenous fat Fb represents 15 to 70%, more preferably 20 to 65%, more preferably 20 to 60%, more preferably 25 to 55% of the total fat of Fa+Fb+Fc.

In a particular embodiment, the cat kibble comprises from 30% to 80%, preferably from 40% to 70 %, more preferably from 40% to 65%, more preferably from 40% to 60% of the vegetable material C (% by weight of cat kibble).

In a preferred embodiment, the vegetable material C is obtained from a source selected from the group consisting of rice, corn, wheat, milo, alfalfa, barley, soy, chicory, pea, rye, sorghum, oat, tapioca, potato, bean, carrot, beetroot, broccoli, butternut, cabbage, cereal, chickpea, green bean, lentil, spinach, fruits such as apple, blueberries, cranberries, pomegranate, apple, pear, tomatoes, blackberries, or combinations thereof. More preferably, the vegetable material C is obtained from a source selected from the group consisting of rice, corn, soy, chicory, wheat, pea, and combinations thereof. More preferably, the vegetable material C is obtained from a source selected from the group consisting of rice, corn, soy, wheat, pea, and combinations thereof. In a particular embodiment, the vegetable material C comprises rice, corn, corn gluten, wheat, fiber source and/or pea. Preferably, the vegetable material is in the form of whole grains and/or fractions of grains and/or meals and/or semolinas and/or gluten.

Preferably, the endogenous fat fraction Fc represents 5 to 30%, more preferably 5 to 25%, more preferably 5 to 20%, more preferably from 5 to 15% of the total fat of Fa+Fb+Fc.

In a particular embodiment, the cat kibble comprises other cat kibble ingredient(s) that cannot be encompassed within the definitions of animal material A, exogenous fat Fb and vegetable material C as above described. Preferably, the cat kibble thus further comprises at least another cat kibble ingredient, preferably selected from the group consisting of nutrients, palatability enhancing compositions, antioxidants, preservatives, surfactants, texturing or texturizing, stabilizing agents, amino acids, vitamins, colouring agents, flavors, seasonings, and combinations thereof.

Advantageously, the final moisture of the cat kibble is less than 14% moisture. Preferably, said final moisture is from about 3% to about 10%. Yet preferably, it is from about 3% to about 8%.

In a particular embodiment, the density of the cat kibble of the invention is from about 300 g/L to about 600 g/L. Yet preferably, the cat kibble has a density from about 320 g/L to about 500 g/L.

Method for preparing a cat kibble

Typically, kibbles can be prepared by different common methods. One of these methods, that is widely used, is an extrusion method.

Another aspect of the present invention thus concerns a method for preparing the cat kibble as above described, comprising at least the steps of:

(i) providing at least an animal material A, an exogenous animal fat Fb and a vegetable material C,
(ii) mixing said at least animal material A and said vegetable material C, thereby obtaining a first mixture,
(iii) optionally precooking said first mixture in a preconditioner, thereby obtaining a precooked mixture,
(iv) extruding said first mixture or said precooked mixture, thereby obtaining an extrudate,
(v) drying said extrudate, thereby obtaining said cat kibble,

wherein said exogenous fat Fb is added during step (ii) and/or during step (iii) and/or step (iv).

In this method, ingredients are first mixed together to form a first mixture (step (ii)). This first mixture is optionally transferred into a preconditioner where it is precooked (optional step (iii)). Typically, the first mixture in the preconditioner is sufficiently moistened to become extrudable.

The first mixture then enters an extruder where it is typically cooked at an elevated temperature and pressure and then forced out of the apparatus through a die (step (iv)). This die forms the extrudate into a specific shape. Individual extrudates (pieces of food) are created by periodically slicing off the end of the extruded stream of product.

The individual extrudates are then dried by any known means, for example in a hot air dryer. The product is dried until it contains less than 14% final moisture, and preferably about from about 3% to about 10% moisture, and more preferably from about 3% to about 8%.

In a particular embodiment, in step (i), said animal material A, said exogenous animal fat Fb and said vegetable material C can be provided in different containers in one or more packages.

In particular, said animal material A and said exogenous animal fat Fb can be provided in different containers in a first package, and said vegetable material C can be provided in another container in a second package. According to this particular embodiment, said step (i) can comprise a step (i1) of providing said animal material A and exogenous animal fat Fb in a first package, preferably in different containers, and a step (i2) of providing said vegetable material C in a second package.

The exogenous fat Fb can be added during one or more steps of the method.

In a first particular embodiment, the exogenous fat Fb is added during one step selected from the group consisting of step (ii), step (iii) and step (iv). For example, the exogenous fat Fb is added during step (iv) of extrusion. Alternatively, the exogenous fat Fb is added during step (iii) of precooking.

In a second particular embodiment, the exogenous fat Fb is added during two steps selected from the group consisting of step (ii), step (iii) and step (iv).

For example, a first part of the exogenous fat Fb can be added during step (ii) and a second part of said exogenous fat Fb is added during step (iii).

Another example consists of adding a first part of the exogenous fat Fb during step (ii) and a second part of said exogenous fat Fb is added during step (iv).

In another example which is preferred among this second particular embodiment, a first part of the exogenous fat Fb is added during step (iii) and a second part of said exogenous fat Fb is added during step (iv).

Preferably in this second particular embodiment, at least 50%, preferably at least 60%, more preferably at least 70%, more preferably at least 80%, more preferably at least 90%, more preferably at least 95%, more preferably at least 97%, more preferably at least 99% of the exogenous fat Fb is added during the step (iv) of extrusion of the mixture.

In a third particular embodiment, the exogenous fat Fb is added during step (ii), step (iii) and step (iv).

Preferably in this third particular embodiment, at least 50%, preferably at least 60%, more preferably at least 70%, more preferably at least 80%, more preferably at least 90%, more preferably at least 95%, more preferably at least 97%, more preferably at least 99% of the exogenous fat Fb is added during the step (iv) of extrusion of the mixture.

Preferably, the extrusion is performed under appropriate conditions in order to obtain a cat kibble having a density from about 300 g/L to about 600 g/L. Yet preferably, the cat kibble has a density from about 320 g/L to about 500 g/L.

Method for enhancing palatability of a cat kibble preparation

Another aspect of the present invention concerns a method for enhancing palatability of a cat kibble preparation, comprising at least the steps of:

(i) providing a cat kibble preparation comprising a first mixture of at least:

- an animal material A comprising an endogenous fat fraction Fa and
- a vegetable material C comprising an endogenous fat fraction Fc,

(ii) optionally precooking said first mixture in a preconditioner, thereby obtaining a precooked mixture,
(iii) extruding said first mixture or said precooked mixture, thereby obtaining an extrudate,
(iv) drying said extrudate, thereby obtaining said cat kibble,

wherein at least 2.0% by weight of cat kibble of an exogenous fat Fb is added during step (ii) and/or during step (iii) and/or step (iv),
and wherein the ratio R1 of Fa/Fb of said cat kibble ranges from 0.7 to 2.5 and the ratio R2 of (Fa + Fb)/Fc of said cat kibble ranges from 6.0 to 13.0.

The particular embodiments above described for the method for preparing the cat kibble can be applied herein.

Coated cat kibble

Inventors have found that the cat kibble according to the present invention is intrinsically highly palatable, said high palatability being optionally further enhanced by adding one or more palatability-enhancing compositions thereon by coating. In others terms, cat kibbles according to the invention are more palatable than other cat kibbles when compared with the same palatability-enhancing composition coated onto these cat kibbles.

A coated cat kibble thus consists of a cat kibble according to the invention, coated with a cat kibble coating.

In particular, a coated cat kibble can be prepared according to the method of preparation as above described, further comprising a step of coating the cat kibble with a cat kibble coating.

The present invention thus also concerns a method for preparing a coated cat kibble, comprising at least the steps of:

- preparing a cat kibble as above described, and
- coating said cat kibble with a cat kibble coating, thereby obtaining a coated cat kibble.

Preferably, the cat kibble coating is a fat and/or a palatability-enhancing composition.

As above mentioned, a "palatability-enhancing composition" refers to a mixture of one or more palatability enhancers. Palatability enhancers are either in a liquid form or in a powder form. A liquid palatability enhancer is typically sprayed on while a dry palatability enhancer is typically dusted on.

Advantageously, said palatability-enhancing composition comprises at least one inorganic phosphate compound, preferably phosphoric acid, monophosphates, pyrophosphates, polyphosphates, and combinations thereof. Said inorganic phosphate compound is preferably selected from the group consisting of phosphoric acid, monophosphates, pyrophosphates, polyphosphates, and combinations thereof. A preferred inorganic phosphate compound according to the present invention is a pyrophosphate compound selected from the group consisting of disodium pyrophosphate, trisodium pyrophosphate, tetrasodium pyrophosphate, dipotassium pyrophosphate, tripotassium pyrophosphate, tetrapotassium pyrophosphate, tetraferric pyrophosphate, and combinations thereof. A more particularly preferred pyrophosphate compound is trisodium pyrophosphate. A preferred polyphosphate compound for use in the present invention is sodium tripolyphosphate.

Said inorganic phosphate compound is preferably present in the palatability-enhancing composition in an amount of about 0.01 to 75%, yet preferably about 0.05 to 70%, more preferably about 0.1 to 65%, yet more preferably about 0.25 to 60% by weight of the composition.

Advantageously, this palatability-enhancing composition comprises at least one animal digest as defined above.

Preferred animal digests are poultry product or by-product digests, pork product or by-product digests, and fish by-product digests.

Said animal digest is preferably present in said palatability-enhancing composition in an amount of about 0.01 to 99%, more preferably about 0.05 to 95%, yet more preferably about 0.1 to 90%, even more preferably about 0.2 to 85%, and yet even more preferably about 0.5 to 80% by weight of the composition.

Advantageously, the palatability-enhancing composition comprises Maillard reaction products obtained upon thermally reacting in situ carbohydrates and peptides and/or amino acids.

The content of such ingredients in said palatability-enhancing composition is preferably of about 0.01 to 99%, yet preferably about 0.05 to 95%, more preferably about 0.1 to 90%, yet more preferably about 0.2 to 85%, and even more preferably about 0.5 to 80%, by weight of the composition.

In a first embodiment, the cat kibble coating is a palatability-enhancing composition. Preferably, this palatability-enhancing composition is liquid.

In a second embodiment, the cat kibble coating is a fat.

In a third embodiment, the cat kibble coating is a fat and a palatability-enhancing composition. Preferably, this palatability-enhancing is in a powder form. Said palatability-enhancing composition and fat can be applied concomitantly, or sequentially, or at time intervals.

For example, (uncoated) cat kibbles can be placed in a container such a tub or a coating drum for mixing. A fat, such as pork fat or poultry fat, is heated and then sprayed onto the pet food in a manner to obtain a coating of the kibbles. The coating does not need to be a continuous layer, but is preferably uniform. After the fat, the palatability-enhancing composition may be applied.

Alternatively, the palatability-enhancing composition can be mixed with the fat and applied concurrently.

Yet alternatively, the palatability-enhancing composition is coated before deposition of fat.

When added, the amount of palatability-enhancing composition is preferably from 0.1 to 10%, more preferably from 0.1 to 7.5%, more preferably from 0.1 to 5%, more preferably from 0.1 to 4%, preferably from 0.5 to 3% by weight of the coated cat kibble.

The present invention is directed to a coated cat kibble consisting of:

- a cat kibble as above described, coated with a cat kibble coating, or
- a cat kibble obtainable by the method of preparing a coated cat kibble as above described.

Kit

Another aspect of the present invention concerns a kit comprising, in one or more containers in a single package:

    a) a cat kibble as above described;
    b) optionally, a cat kibble coating.

Preferably, said cat kibble coating is a fat and/or a palatability-enhancing composition as above described.

Another aspect of the invention concerns:

    a) an animal material A comprising an endogenous fat fraction Fa, and
    b) an exogenous animal fat Fb, and
    c) a vegetable material C comprising an endogenous fat fraction Fc,

as a combined preparation for simultaneous, separate or sequential use in a method for preparing a cat kibble, wherein cat kibble comprises at least 2.0% of exogenous fat Fb by weight of cat kibble, wherein the ratio R1 of Fa/Fb ranges from 0.7 to 2.5, and wherein the ratio R2 of (Fa + Fb)/Fc ranges from 6.0 to 13.0.

Another aspect of the invention concerns:

a) an animal material A comprising an endogenous fat fraction Fa, and
b) an exogenous animal fat Fb,

as a combined preparation for simultaneous, separate or sequential use in a method for preparing a cat kibble further comprising a vegetable material C comprising an endogenous fat fraction Fc,

wherein said cat kibble comprises at least 2.0% of exogenous fat Fb by weight of cat kibble, wherein the ratio R1 of Fa/Fb ranges from 0.7 to 2.5, and wherein the ratio R2 of (Fa + Fb)/Fc ranges from 6.0 to 13.0.

Particular embodiments according to these aspects of the present invention further comprise a means for communicating information or instructions, to help using the kits' elements.

Method for feeding a cat

Another aspect of the present invention concerns a method for feeding a cat, comprising:

- feeding said cat with a cat kibble as described above or as obtained with the method of preparing a cat kibble as described above.

Preferably, said cat kibble is a coated cat kibble as above described, i.e. a cat kibble as above described coated with a cat kibble coating, or a coated cat kibble obtainable with the method previously detailed.

The present invention will be further described by reference to the following examples, which are presented for the purpose of illustration only and are not intended to limit the scope of the invention.

EXAMPLES

**1. MATERIALS AND METHODS**

a. Preparation of coated cat kibbles

Nutritionally-balanced cat kibbles suitable for consumption by pets were prepared by using an extrusion process comprising the steps of mixing the cat kibble ingredients, preconditioning, extruding and drying. The cat kibble ingredients were fed into a preconditioner before entering an extruder with jackets for cooling or heating. Cooling water was constantly passed through the jackets. The extruded material was passed though a die and cut into homogenous spherical shape. They were thus dried in a hot air dryer and the resulting diets had less than 8% moisture. They were stored at ambient temperature before being tested.

When added, the exogenous fat was incorporated during the extrusion process using dedicated inlets.

These dry kibbles were then coated with animal fat and with 2% of a palatability enhancer comprising a powder of pork liver digest, trisodium pyrophosphate and yeasts.

b. Determination of palatability with a two-bowl test

A "two-bowl test" or "two-pan test" or "versus test" enables one to determine preference of pets for one pet food compared simultaneously to another. A "versus test" is based on the postulate whereby the more food consumed, the more palatable it is.

Tests were performed on an expert panel of 40 cats.

In some tests, palatability of a tested cat kibble was determined by comparison with a commercial super-premium cat kibble control, named "SP control", known as having a high palatability to cats. When used, the SP control was provided within the same commercial batch.

Operating method of the test:

- Identical amounts of the two tested kibbles (for example A and B) are weighed out and placed in identical bowls. The amount present in each ration enables the daily requirements of the pets to be met.

- Distribution of the bowls: the bowls are presented at the same time to each cat in an individual loose box.

- Duration of the test: from about 8 minutes to about 24 hours.

- Measured parameters: amount of each food consumed by the end of the test;

- Calculated parameters: individual consumption ratio in % (CR)

$$CRA = \text{consumption of A (g)} \times 100/\text{(consumption of A+B) (g)}$$

$$CRB = \text{consumption of B (g)} \times 100/\text{(consumption of A+B) (g);}$$

- Average consumption ratio (ACR) = average of all individual ratios (an equal importance is given to each animal, regardless of its size and of its corresponding consumption).

If animals have higher or lower consumption compared to predetermined values (which are function of, e.g., the animal weight and/or metabolism), they are not taken into account into statistical treatment.

Statistical analysis

Statistical analysis is used to determine if there is a significant difference between the 2 ratios. A Student's t-test with 3 error thresholds, namely 5%, 1% and 0.1%, is performed.
Significance levels are noted as below:

| NS | not significant | ($p > 0.05$) |
| * | significant | ($p \leq 0.05$) |
| ** | highly significant | ($p \leq 0.01$) |
| *** | very highly significant | ($p \leq 0.001$) |

## 2. RESULTS

Ratios R1 and R2 of the different diets used in the following examples are resumed into Table 1.

*Table 1*

| | Example (s) | R1 = Fa / Fb* | According to the invention (+) or out of the invention (-) | R2 = (Fa + Fb*) / Fc | According to the invention (+) or out of the invention (-) |
|---|---|---|---|---|---|
| Diet 1 | 1 | nd | - | 5.20 | - |
| Diet 2 | 1 | 4.39 | - | 5.62 | - |
| Diet 3 | 1 | 2.48 | + | 7.34 | + |
| Diet 4 | 1 | 1.18 | + | 9.65 | + |
| Diet 5 | 1 | 0.78 | + | 11.89 | + |
| Diet 6 | 2 | nd | - | 4.09 | - |
| Diet 7 | 2 | 2.25 | + | 6.00 | + |
| Diet 8 | 2 | 1.10 | + | 7.84 | + |

(continued)

| | Example (s) | R1 = Fa / Fb* | According to the invention (+) or out of the invention (-) | R2 = (Fa + Fb*) / Fc | According to the invention (+) or out of the invention (-) |
|---|---|---|---|---|---|
| Diet 9 | 3 | nd | - | 2.85 | - |
| Diet 10 | 3 | 0.71 | + | 6.83 | + |
| Diet 11 | 4 | 2.57 | - | 3.78 | - |
| Diet 12 | 4 | 0.63 | - | 7.06 | + |
| Diet 13 | 5 | nd | - | 4.26 | - |
| Diet 14 | 5 | 1.16 | + | 13.39 | - |
| Diet 15 | 6 | 1.18 | + | 9.65 | + |
| Diet 16 | 6 | 1.18 | + | 9.65 | + |
| Diet 17 | 6 | 1.10 | + | 7.84 | + |
| Diet 18 | 6 | 1.10 | + | 7.84 | + |
| nd: not determinable | | | | | |

EXAMPLE 1

Nutritionally-balanced cat food diets in the form of coated cat kibbles were prepared according to the process mentioned in paragraph 1.1 with the same ingredients. In some of these cat kibbles, exogenous animal fat was incorporated. Table 1 presents the formulation of each cat kibble.

*Table 1*

| Ingredients composition (%) | Diet 1 | Diet 2 | Diet 3 | Diet 4 | Diet 5 |
|---|---|---|---|---|---|
| Vegetable material (rice, corn gluten, wheat, corn, fiber source, pea proteins concentrate) | 50.5 | 50.2 | 49.2 | 47.9 | 46.6 |
| Animal material (fresh meat, poultry meal by-products, whole dried eggs, brewer's yeast by-product) | 44.4 | 43.4 | 43.2 | 42.1 | 41.0 |
| cat premix (vitamins, minerals, amino acids) | 5.2 | 5.1 | 5.1 | 4.9 | 4.8 |
| exogenous animal fat | - | 1.3 | 2.5 | 5.1 | 7.5 |
| Fa | 83.9% | 69.2% | 62.7% | 49.1% | 40.5% |
| Fb | 0% | 15.7% | 25.3% | 41.5% | 51.7% |
| Fc | 16.1% | 15.1% | 12.0% | 9.4% | 7.8% |
| Fa / Fb (R1) | nd | 4.39 | 2.48 | 1.18 | 0.78 |
| (Fa+Fb) / Fc (R2) | 5.20 | 5.62 | 7.34 | 9.65 | 11.89 |

(i) Versus test were first performed to compare palatability to cats of the Diet 1 and the Diet 2 (the ratios of which are out of the invention) versus the super premium control (SP). The results are presented in Table 2.

*Table 2*

| Food A | Food B | Consumption Ratio | | Statistical significance |
|--------|--------|------|------|--------------------------|
| | | % A | % B | |
| Diet 1 | SP control | 33 | 67 | *** |
| Diet 2 | SP control | 32 | 68 | *** |

As shown in Table 2, consumption of the super premium control was significantly higher than Diet 1 and Diet 2, respectively. Diet 2 was thus not more palatable than Diet 1 compared to the super premium control. This demonstrates that the addition of exogenous fat without complying with the claimed ratios R1 and R2 for the formulation does not enable to achieve palatability of the super premium control.

(ii) Versus test were further performed to compare palatability to cats of the Diets 3, 4, 5 (the ratios of which are according to the invention) versus the super premium control (SP). The results are presented in Table 3.

*Table 3*

| Food A | Food B | Consumption Ratio | | Statistical significance |
|--------|--------|------|------|--------------------------|
| | | % A | % B | |
| Diet 3 | SP control | 46 | 54 | NS |
| Diet 4 | SP control | 45 | 55 | NS |
| Diet 5 | SP control | 47 | 53 | NS |

As shown in Table 3, consumption of the food by cats was not significantly different between the super premium control and the diets (Diet 3, Diet 4, Diet 5), contrary to the results observed with Diet 1 and Diet 2 (see (i)). In other terms, these cat kibbles according to the invention (Diet 3, Diet 4, Diet 5) were as palatable as the super premium control, whereas the cat kibbles out of the invention (Diet 1, Diet 2) were less consumed than this cat super premium control. This clearly demonstrates that the addition of exogenous animal fat, while complying with the claimed ratios R1 and R2 for the formulation, enhances palatability of kibbles to cats.

(iii) Versus tests were further performed to compare palatability to cats of the Diet 1 and the Diets 3, 4. The results are presented in Table 4.

*Table 4*

| Food A | Food B | Consumption Ratio | | Statistical significance |
|--------|--------|------|------|--------------------------|
| | | % A | % B | |
| Diet 1 | Diet 3 | 28 | 72 | *** |
| Diet 1 | Diet 4 | 24 | 76 | *** |
| Diet 1 | Diet 5 | 27 | 73 | *** |

As shown in Table 4, consumptions of Diets 3 and 4 were very significantly higher than Diet 1. This confirms that the addition of exogenous animal fat, while complying with the claimed ratios R1 and R2 for the formulation, enhances palatability of kibbles to cats.

(iv) Finally, versus tests were performed to compare palatability to cats of Diet 3 and Diet 5, and of Diet 4 and Diet 5. The results are presented in Table 5.

*Table 5*

| Food A | Food B | Consumption Ratio | | Statistical significance |
|---|---|---|---|---|
| | | % A | % B | |
| Diet 3 | Diet 4 | 31 | 69 | *** |
| Diet 4 | Diet 5 | 44 | 56 | NS |

As shown in Table 5, consumption of Diet 4 was significantly higher than Diet 3. Consumption of the food by cats was not significantly different between Diet 4 and Diet 5. This demonstrates that among claimed ratios, some ratios R1 and R2 are preferred.

EXAMPLE 2

Nutritionally-balanced cat food diets in the form of coated cat kibbles were prepared according to the process mentioned in paragraph 1.1 with the same ingredients. In some of these cat kibbles, exogenous animal fat was incorporated. Table 6 presents the formulation of each cat kibble.

*Table 6*

| Ingredients composition (%) | Diet 6 | Diet 7 | Diet 8 |
|---|---|---|---|
| Vegetable material (rice, corn gluten, wheat, corn, fiber source, pea proteins concentrate) | 61.6 | 60.0 | 58.5 |
| Animal material (poultry meal by-products, whole dried eggs, brewer's yeast by-product) | 33.2 | 32.4 | 31.6 |
| cat premix (vitamins, minerals, amino acids) | 5.2 | 5.1 | 4.9 |
| exogenous animal fat | - | 2.5 | 5.0 |
| Fa | 80.4% | 59.3% | 46.4% |
| Fb | 0% | 26.4% | 42.3% |
| Fc | 19.6% | 14.3% | 11.3% |
| Fa / Fb (R1) | nd | 2.25 | 1.10 |
| (Fa+Fb) / Fc (R2) | 4.09 | 6.00 | 7.84 |

(i) Versus test were first performed to compare palatability to cats of the Diets 6, 7 and 8 versus the super premium control (SP). The results are presented in Table 7.

*Table 7*

| Food A | Food B | Consumption Ratio | | Statistical significance |
|---|---|---|---|---|
| | | % A | % B | |
| Diet 6 | SP control | 24 | 76 | *** |
| Diet 7 | SP control | 49 | 51 | NS |
| Diet 8 | SP control | 51 | 49 | NS |

As shown in Table 7, consumption of the super premium control was significantly higher than Diet 6. However, consumption of the food by cats was not significantly different between the super premium control and Diet 7 and Diet 8, respectively. In other terms, these cat kibbles according to the invention (Diet 7, Diet 8) were as palatable as the super premium control, whereas the cat kibble out of the invention (Diet 6) was less consumed than this cat super premium control. This clearly demonstrates that the addition of exogenous animal fat, while complying with the claimed ratios R1 and R2 for the formulation, enhances palatability of kibbles to cats.

(ii) Versus tests were performed to compare palatability to cats of the cat kibbles. The results are presented in Table 8.

*Table 8*

| Food A | Food B | Consumption Ratio | | Statistical significance |
|--------|--------|------|------|--------------------------|
| | | % A | % B | |
| Diet 6 | Diet 7 | 34 | 66 | *** |
| Diet 6 | Diet 8 | 35 | 65 | *** |

As shown in Table 8, consumption of Diets 7 and 8 were significantly higher than Diet 6, respectively. This clearly demonstrates that the addition of exogenous animal fat, while complying with the claimed ratios R1 and R2, enhances palatability of kibbles to cats.

EXAMPLE 3

Nutritionally-balanced cat food diets in the form of coated cat kibbles were prepared according to the process mentioned in paragraph 1.1 with the same ingredients. In some of these cat kibbles, exogenous animal fat was incorporated. Table 9 presents the formulation of each cat kibble.

*Table 9*

| +Ingredients composition (%) | Diet 9 | Diet 10 |
|------------------------------|--------|---------|
| Vegetable material (rice, corn gluten, corn, fiber source) | 60.0 | 56.9 |
| Animal material (poultry meal by-products, greaves, brewer's yeast by-product, fish meal by-products) | 35.0 | 33.2 |
| cat premix (vitamins, minerals, amino acids) | 5.0 | 4.7 |
| exogenous animal fat | - | 5.1 |
| Fa | 74.0% | 36.3% |
| Fb | 0% | 50.9% |
| Fc | 26.0% | 12.8% |
| Fa/Fb (R1) | nd | 0.71 |
| (Fa+Fb) / Fc (R2) | 2.85 | 6.83 |

Versus tests were performed to compare palatability to cats of these cat kibbles. The results are presented in Table 10.

*Table 10*

| Food A | Food B | Consumption Ratio | | Statistical significance |
|--------|--------|------|------|--------------------------|
| | | % A | % B | |
| Diet 9 | Diet 10 | 35 | 65 | * |

As shown in Table 10, consumption of Diet 10 was highly significantly higher than Diet 9. This clearly demonstrates that the addition of exogenous animal fat, while complying with the claimed ratios R1 and R2 for the formulation, enhances palatability of kibbles to cats.

EXAMPLE 4

Nutritionally-balanced cat food diets in the form of coated cat kibbles were prepared according to the process mentioned in paragraph 1.1. In some of these cat kibbles, exogenous animal fat was incorporated. Table 11 presents the formulation of each cat kibble.

*Table 11*

| Ingredients composition (%) | Diet 11 | Diet 12 |
|---|---|---|
| Vegetable material (rice, corn gluten, corn, fiber source, wheat) | 61.1 | 57.9 |
| Animal material (poultry meal by-products, brewer's yeast by-product, whole dried eggs) | 35.4 | 33.6 |
| cat premix (vitamins, minerals, amino acids) | 1.7 | 1.6 |
| exogenous animal fat | 1.7 | 6.8 |
| Fa | 56.9% | 33.5% |
| Fb | 22.1% | 54.2% |
| Fc | 20.9% | 12.3% |
| Fa / Fb (R1) | 2.57 | 0.63 |
| (Fa+Fb) / Fc (R2) | 3.78 | 7.06 |

(i) Versus test were further performed to compare palatability to cats of the Diets 11, 12 versus the super premium control (SP). The results are presented in Table 12.

*Table 12*

| Food A | Food B | Consumption Ratio | | Statistical significance |
|---|---|---|---|---|
| | | % A | % B | |
| Diet 11 | SP control | 23 | 77 | *** |
| Diet 12 | SP control | 29 | 71 | *** |

As shown in Table 12, consumption of the super premium control by cats was significantly higher than Diets 11 and 12. In other terms, cat kibbles out of the invention (Diet 11, Diet 12) were less consumed than this cat super premium control, even when more exogenous animal fat was incorporated (Diet 12). This clearly demonstrates that the addition of exogenous animal fat, when not complying with the claimed ratios R1 and R2 for the formulation, does not enable to enhance palatability of kibbles to cats.

(ii) Versus tests were performed to compare palatability to cats of these cat kibbles. The results are presented in Table 13.

*Table 13*

| Food A | Food B | Consumption Ratio | | Statistical significance |
|---|---|---|---|---|
| | | % A | % B | |
| Diet 11 | Diet 12 | 52 | 48 | NS |

As shown in Table 13, consumption of the food by cats was not significantly different between Diet 11 and Diet 12. This clearly demonstrates that the addition of exogenous fat without complying with the claimed ratios R1 and R2 for the formulation does not enable to achieve a higher palatability-enhancing effect.

EXAMPLE 5

Nutritionally-balanced cat food diets in the form of coated cat kibbles were prepared with the same ingredients than in Example 3, according to the process mentioned in paragraph 1.1. In some of these cat kibbles, exogenous animal fat was incorporated. Table 14 presents the formulation of each cat kibble.

*Table 14*

| Ingredients composition (%) | Diet 13 | Diet 14 |
|---|---|---|
| Vegetable material (rice, corn gluten, corn, fiber source) | 52.3 | 49.6 |
| Animal material (poultry meal by-products, greaves, brewer's yeast by-product, fish meal by-products) | 43.1 | 40.9 |
| cat premix (vitamins, minerals, amino acids) | 4.6 | 4.4 |
| exogenous animal fat | - | 5.1 |
| Fa | 81.0% | |
| Fb | 0% | |
| Fc | 19.0% | |
| Fa / Fb (R1) | nd | 1.16 |
| (Fa+Fb) / Fc (R2) | 4.26 | 13.39 |

(i) Versus test were further performed to compare palatability to cats of the Diets 13, 14 versus the super premium control (SP). The results are presented in Table 15.

*Table 15*

| Food A | Food B | Consumption Ratio | | Statistical significance |
|---|---|---|---|---|
| | | % A | % B | |
| Diet 13 | SP control | 27 | 73 | *** |
| Diet 14 | SP control | 27 | 73 | *** |

As shown in Table 15, consumption of the super premium control by cats was significantly higher than Diets 13 and 14. In other terms, cat kibbles out of the invention (Diet 13, Diet 14) were less consumed than this cat super premium control, even when exogenous animal fat was incorporated (Diet 14). This clearly demonstrates that the addition of exogenous animal fat, when not complying with the claimed ratios R1 and R2 for the formulation, does not enable to enhance palatability of kibbles to cats.

(ii) Versus tests were performed to compare palatability to cats of these cat kibbles. The results are presented in Table 16.

*Table 16*

| Food A | Food B | Consumption Ratio | | Statistical significance |
|---|---|---|---|---|
| | | % A | % B | |
| Diet 13 | Diet 14 | 47 | 53 | NS |

As shown in Table 16, consumption of the food by cats was not significantly different between Diet 13 and Diet 14. This clearly demonstrates that the addition of exogenous fat without complying with the claimed ratios R1 and R2 for the formulation does not enable to achieve a higher palatability-enhancing effect than the one obtained without incorporation of exogenous animal fat. This is further confirmed by comparing these results with the results regarding the Diets of Example 3 which comprise same ingredients. In Example 3, the addition of exogenous animal fat, while complying with claimed ratios, enables to achieve a higher palatability-enhancing effect whereas in this Example 5, the addition of exogenous fat, without complying with claimed ratios, does not enhance palatability to cats.

EXAMPLE 6

(i) First, nutritionally-balanced cat food diets in the form of coated cat kibbles were prepared according to the process mentioned in paragraph 1.1 with the same ingredients except for the nature of the exogenous animal fat. The formulations of Diets 15 and 16 are presented in Table 17.

*Table 17*

| Ingredients composition (%) | Diet 15 | Diet 16 |
|---|---|---|
| Vegetable material (rice, corn gluten, wheat, corn, fiber source, pea proteins concentrate) | 47.9 | 47.9 |
| Animal material (fresh meat, poultry meal by-products, whole dried eggs, brewer's yeast by-product) | 42.1 | 42.1 |
| cat premix (vitamins, minerals, amino acids) | 4.9 | 4.9 |
| exogenous pork fat | 5.1 | |
| exogenous beef fat | | 5.1 |
| Fa | 49.1% | 49.1% |
| Fb | 41.5% | 41.5% |
| Fc | 9.4% | 9.4% |
| Fa / Fb (R1) | 1.18 | 1.18 |
| (Fa+Fb) / Fc (R2) | 9.65 | 9.65 |

Versus tests were performed to compare palatability to cats of these cat kibbles. The results are presented in Table 18.

*Table 18*

| Food A | Food B | Consumption Ratio | | Statistical significance |
|---|---|---|---|---|
| | | % A | % B | |
| Diet 15 | Diet 16 | 51 | 49 | NS |
| Diet 15 | SP control | 55 | 45 | NS |
| Diet 16 | SP control | 43 | 57 | NS |

As shown in Table 18, consumptions were not significantly different between Diet 15 (containing pork fat as the exogenous animal fat Fb) and Diet 16 (containing beef tallow as the exogenous animal fat Fb). It is also demonstrated in Table 18 that consumptions were not significantly different between the super-premium cat kibble control and Diet 15, and between the super-premium cat kibble control and Diet 16.

This demonstrates that kibbles according to the invention are palatable to cats, whatever the nature of exogenous animal fat Fb.

(ii) Secondly, nutritionally-balanced cat food diets in the form of coated cat kibbles were prepared according to the process mentioned in paragraph 1.1 with the same ingredients except for the nature of the exogenous fat, i.e. animal fat or plant oil. The formulations of Diets 17 and 18 are presented in Table 19.

*Table 19*

| Ingredients composition (%) | Diet 17 | Diet 18 |
|---|---|---|
| Vegetable material (rice, corn gluten, wheat, corn, fiber source, pea proteins concentrate) | 58.5 | 58.5 |
| Animal material (poultry meal by-products, whole dried eggs, brewer's yeast by-product) | 31.6 | 31.6 |
| cat premix (vitamins, minerals, amino acids) | 4.9 | 4.9 |
| exogenous pork fat | 5.0 | |
| exogenous palm oil | | 5.0 |
| Fa | 46.4% | 46.4% |
| Fb | 42.3% | 42.3% |
| Fc | 11.3% | 11.3% |

(continued)

| Ingredients composition (%) | Diet 17 | Diet 18 |
|---|---|---|
| Fa / Fb (R1) | 1.10 | 1.10 |
| (Fa+Fb) / Fc (R2) | 7.84 | 7.84 |

Versus tests were performed to compare palatability to cats of Diet 17/ of Diet 18 versus the super-premium cat kibble control ("SP control"). The results are presented in Table 20.

Table 20

| Food A | Food B | Consumption Ratio | | Statistical significance |
|---|---|---|---|---|
| | | % A | % B | |
| Diet 17 | SP control | 51 | 49 | NS |
| Diet 18 | SP control | 35 | 65 | ** |

As shown in Table 20, consumptions were not significantly different between Diet 17 (containing pork fat as the exogenous animal fat Fb) and the super-premium cat kibble control. However, the super-premium cat kibble control was very highly significantly more palatable than Diet 18 containing exogenous palm oil as exogenous fat.

This demonstrates that kibbles according to the invention are at least as palatable to cats as a super-premium cat kibble, provided that exogenous fat is from animal origin and whatever the nature of the exogenous animal fat (see above).

**Claims**

1.   A cat kibble comprising at least:

   a) an animal material A comprising an endogenous fat fraction Fa,
   b) an exogenous animal fat Fb,
   c) a vegetable material C comprising an endogenous fat fraction Fc,

   wherein said cat kibble comprises at least 2.0% of exogenous fat Fb by weight of cat kibble, wherein the ratio R1 of Fa/Fb ranges from 0.7 to 2.5,
   and wherein the ratio R2 of (Fa + Fb)/Fc ranges from 6.0 to 13.0.

2.   The cat kibble according to claim 1, wherein the ratio R2 of (Fa + Fb)/Fc ranges from 6.0 to 12.0.

3.   The cat kibble according to claim 1 or 2, wherein said animal material A is selected from the group consisting of fresh meats, animal meals, whole dried eggs, animal proteins, animal digests, milk or derivatives, yeasts, and combinations thereof.

4.   The cat kibble according to any one of claims 1 to 3, wherein said exogenous animal fat Fb is selected from the group consisting of poultry fat, chicken fat, pork fat, lamb tallow, beef tallow, marine oils, and combinations thereof.

5.   The cat kibble according to any one of claims 1 to 4, wherein said vegetable material C is selected from the group consisting of rice, corn, soy, chicory, wheat, pea, and combinations thereof.

6.   The cat kibble according to any one of claims 1 to 5, wherein said cat kibble further comprises at least one ingredient selected from the group consisting of nutrients, palatability enhancing compositions, antioxidants, preservatives, surfactants, texturing or texturizing, stabilizing agents, amino acids, vitamins, colouring agents, flavors, seasonings, and combinations thereof.

7.   The cat kibble according to any one of claims 1 to 6, which is further coated with a cat kibble coating.

8. A method for preparing a cat kibble according to any one of claims 1 to 7, comprising at least the steps of:

(i) providing at least an animal material A, an exogenous animal fat Fb and a vegetable material C,
(ii) mixing said at least animal material A and said vegetable material C, thereby obtaining a first mixture,
(iii) optionally precooking said first mixture in a preconditioner, thereby obtaining a precooked mixture,
(iv) extruding said first mixture or said precooked mixture, thereby obtaining an extrudate,
(v) drying said extrudate, thereby obtaining said cat kibble,

wherein said exogenous fat Fb is added during step (ii) and/or during step (iii) and/or step (iv).

9. The method according to claim 8, wherein said step (i) comprises a step (i1) of providing said animal material A and exogenous animal fat Fb in a first package, preferably in different containers, and a step (i2) of providing said vegetable material C in a second package.

10. The method according to claim 8 or 9, wherein a first part of said exogenous fat Fb is added during step (iii) and a second part of said exogenous fat Fb is added during step (iv).

11. The method according to any one of claims 8 to 10, further comprising at least the step of coating said cat kibble with a cat kibble coating, thereby obtaining a coated cat kibble.

12. The cat kibble according to claim 7 or the method according to claim 11, wherein said cat kibble coating is a fat and/or a palatability-enhancing composition.

**Patentansprüche**

1. Katzen-Trockenfutter, das mindestens enthält:

a) ein tierisches Material A, das eine endogene Fettfraktion Fa umfasst,
b) ein exogenes Tierfett Fb,
c) ein Pflanzenmaterial C, das eine endogene Fettfraktion Fc enthält,

wobei das Katzen-Trockenfutter mindestens 2,0% des exogenen Fetts Fb nach Gewicht des Katzen-Trockenfutters enthält,
wobei das Verhältnis R1 von Fa/Fb von 0,7 bis 2,5 reicht,
und wobei das Verhältnis R2 von (Fa + Fb)/Fc von 6,0 bis 13,0 reicht.

2. Katzen-Trockenfutter nach Anspruch 1, wobei das Verhältnis R2 von (Fa + Fb)/Fc von 6,0 bis 12,0 reicht.

3. Katzen-Trockenfutter nach Anspruch 1 oder 2, wobei das Tiermaterial A ausgewählt wird aus der Gruppe, die besteht aus frischen Fleischwaren, Tiermehl, ganzen getrockneten Eiern, Tierproteinen, tierischen Aufschlussprodukten, Milch oder Derivaten, Hefen und Kombinationen derselben.

4. Katzen-Trockenfutter nach einem der Ansprüche 1 bis 3, wobei das exogene Tierfett Fb ausgewählt wird aus der Gruppe, die besteht aus Geflügelfett, Hühnerfett, Schweinefett, Lammtalg, Rindertalg, Fischölen und Kombinationen derselben.

5. Katzen-Trockenfutter nach einem der Ansprüche 1 bis 4, wobei das Pflanzenmaterial C ausgewählt wird aus der Gruppe, die besteht aus Reis, Mais, Soja, Chicoree, Weizen, Erbsen und Kombinationen derselben.

6. Katzen-Trockenfutter nach einem der Ansprüche 1 bis 5, wobei das Katzen-Trockenfutter ferner mindestens einen Bestandteil enthält, der ausgewählt wird aus der Gruppe, die besteht aus Nährstoffen, die Schmackhaftigkeit erhöhenden Zusammensetzungen, Antioxidantien, Konservierungsmitteln, Tensiden, Strukturierungs- oder Texturierungs-, Stabilisierungsmitteln, Aminosäuren, Vitaminen, Farbstoffen, Geschmacksstoffen, Würzstoffen und Kombinationen derselben.

7. Katzen-Trockenfutter nach einem der Ansprüche 1 bis 6, welches ferner mit einem Überzugsmaterial für Katzen-Trockenfutter überzogen ist.

**8.** Verfahren zum Herstellen eines Katzen-Trockenfutters nach einem der Ansprüche 1 bis 7, das zumindest die folgenden Schritte umfasst:

(i) Bereitstellen von mindestens einem tierischen Material A, einem exogenen Tierfett Fb und einem Pflanzenmaterial C,
(ii) Mischen von mindestens dem tierischen Material A und dem Pflanzenmaterial C, wobei eine erste Mischung erhalten wird,
(iii) optional Vorkochen der ersten Mischung in einer Vorbehandlungseinrichtung, wodurch eine vorgekochte Mischung erhalten wird,
(iv) Extrudieren der ersten Mischung oder der vorgekochten Mischung, wodurch ein Extrudat erhalten wird,
(v) Trocknen des Extrudats, wodurch das Katzen-Trockenfutter erhalten wird,

wobei das exogene Fett Fb während Schritt (ii) und/oder Schritt (iii) und/oder Schritt (iv) zugefügt wird.

**9.** Verfahren nach Anspruch 8, wobei der Schritt (i) einen Schritt (i1) des Bereitstellens des tierischen Materials A und des exogenen Tierfetts Fb in einer ersten Packung umfasst, vorzugsweise in unterschiedlichen Behältern, und einen Schritt (i2) des Bereitstellens des Pflanzenmaterials C in einer zweiten Packung.

**10.** Verfahren nach Anspruch 8 oder 9, wobei ein erster Teil des exogenen Fetts Fb während Schritt (iii) zugefügt wird, und ein zweiter Teil des exogenen Fetts Fb wird während Schritt (iv) zugesetzt.

**11.** Verfahren nach einem der Ansprüche 8 bis 10, das ferner zumindest den Schritt des Beschichtens des Katzen-Trockenfutters mit einer Katzen-Trockenfutter-Beschichtung umfasst, wodurch ein beschichtetes Katzen-Trockenfutter erhalten wird.

**12.** Katzen-Trockenfutter nach Anspruch 7 oder das Verfahren nach Anspruch 11, wobei die Katzen-Trockenfutter-Beschichtung ein Fett und/oder eine die Schmackhaftigkeit erhöhende Zusammensetzung ist.


**Revendications**

**1.** Croquette pour chat comprenant au moins :

a) une matière animale A comprenant une fraction de graisse endogène Fa,
b) une graisse animale exogène Fb,
c) une matière végétale C comprenant une fraction de graisse endogène Fc,

dans laquelle ladite croquette pour chat comprend au moins 2,0 % de graisse exogène Fb en poids de la croquette pour chat,
dans laquelle le rapport R1 de Fa/Fb est situé dans la plage allant de 0,7 à 2,5,
et dans laquelle le rapport R2 de (Fa + Fb)/Fc est situé dans la plage allant de 6,0 à 13,0.

**2.** Croquette pour chat selon la revendication 1, dans laquelle le rapport R2 de (Fa + Fb)/Fc est situé dans la plage allant de 6,0 à 12,0.

**3.** Croquette pour chat selon la revendication 1 ou 2, dans laquelle ladite matière animale A est choisie dans le groupe constitué par les viandes fraîches, les farines animales, les œufs entiers en poudre, les protéines animales, les digestats animaux, le lait ou ses dérivés, les levures, et leurs combinaisons.

**4.** Croquette pour chat selon l'une quelconque des revendications 1 à 3, dans laquelle ladite graisse animale exogène Fb est choisie dans le groupe constitué par la graisse de volaille, la graisse de poulet, la graisse de porc, le suif de mouton, le suif de bœuf, les huiles d'origine marine, et leurs combinaisons.

**5.** Croquette pour chat selon l'une quelconque des revendications 1 à 4, dans laquelle ladite matière végétale C est choisie dans le groupe constitué par le riz, le maïs, le soja, la chicorée, le blé, le pois, et leurs combinaisons.

**6.** Croquette pour chat selon l'une quelconque des revendications 1 à 5, dans laquelle ladite croquette pour chat comprend en outre au moins un ingrédient choisi dans le groupe constitué par les nutriments, les compositions améliorant l'appétence, les antioxydants, les conservateurs, les tensioactifs, les agents de texture ou de texturation, les agents stabilisants, les acides aminés, les vitamines, les colorants, les arômes, les assaisonnements, et leurs combinaisons.

7. Croquette pour chat selon l'une quelconque des revendications 1 à 6, qui est en outre enrobée d'un enrobage de croquette pour chat.

8. Procédé pour préparer une croquette pour chat de l'une quelconque des revendications 1 à 7, comprenant au moins les étapes suivantes :

(i) obtention d'au moins une matière animale A, d'une graisse animale exogène Fb et d'une matière végétale C,
(ii) mélange de ladite matière animale A et de ladite matière végétale C, ce qui donne ainsi un premier mélange ;
(iii) éventuellement précuisson dudit premier mélange dans un pré-conditionneur, ce qui donne ainsi un mélange précuit,
(iv) extrusion dudit premier mélange ou dudit mélange précuit, ce qui donne ainsi un extrudat,
(v) séchage dudit extrudat, ce qui donne ainsi ladite croquette pour chat,

dans lequel ladite graisse exogène Fb est ajoutée durant l'étape (ii) et/ou durant l'étape (iii) et/ou l'étape (iv).

9. Procédé selon la revendication 8, dans lequel ladite étape (i) comprend une étape (il) de fourniture de ladite matière animale A et de la graisse animale exogène Fb dans un premier conditionnement, de préférence dans des récipients différents, et une étape (i2) de fourniture de ladite matière végétale C dans un deuxième conditionnement.

10. Procédé selon la revendication 8 ou 9, dans lequel une première partie de ladite graisse exogène Fb est ajoutée durant l'étape (iii) et une seconde partie de ladite graisse exogène Fb est ajoutée durant l'étape (iv) .

11. Procédé selon l'une quelconque des revendications 8 à 10, comprenant en outre au moins l'étape d'enrobage de ladite croquette pour chat avec un enrobage de croquette pour chat, ce qui donne ainsi une croquette pour chat enrobée.

12. Croquette pour chat selon la revendication 7 ou procédé selon la revendication 11, dans lequel ledit enrobage de croquette pour chat est une graisse et/ou une composition améliorant l'appétence.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005106285 A
- US 2005170067 A
- US 2015056347 A
- US 2006228448 A
- US 2008085350 A
- US 2015237887 A